# EUROPÄISCHE PATENTSCHRIFT

(11) **EP 0 853 871 B1**
(45) Veröffentlichungstag und Bekanntmachung des Hinweises auf die Patenterteilung: **07.11.2001**
(21) Anmeldenummer: 97122491.0
(22) Anmeldetag: 19.12.1997
(51) Int. Cl.: A01C 15/00, B65G 65/48

(54) **Schleuderstreuer**
Centrifugal spreader
Epandeur centrifuge

(30) Priorität: 17.01.1997 DE 19701610
(43) Veröffentlichungstag der Anmeldung: 22.07.1998
(73) Patentinhaber: Amazonen-Werke H. Dreyer GmbH & Co. KG, 49205 Hasbergen (DE)
(72) Erfinder: Dreyer, Heinz, Dr. Dipl.-Ing., 49205 Hasbergen (DE)

(56) Entgegenhaltungen:
- EP-A- 0 078 585
- DE-C- 3 841 146
- FR-A- 1 440 768
- US-A- 3 175 739

## Beschreibung

Die Erfindung betrifft einen Schleuderstreuer gemäß des Oberbegriffes des Patentanspruches 1.

Ein derartiger Schleuderstreuer ist beispielsweise in der DE-OS 18 01 180 beschrieben. Dieser Schleuderstreuer weist einen trichterförmigen Vorratsbehälter auf, in dessen unterem Bereich eine Auslaßöffnung angeordnet ist. Die Auslaßöffnung befindet sich in einer aufrechten Wand. Der Vorratsbehälter ist mit einer Bodenplatte abgeschlossen. In dem Vorratsbehälter ist ein rotierend angetriebenes Rührorgan angeordnet, welches ein etwa parallel zu der Bodenplatte ausgerichtetes Rührelement aufweist, welches am äußeren Ende nach unten abgebogen ist und ein Ansatzelement bildet. Dieses Ansatzelement überstreicht die Auslauföffnung.

Ein derartig ausgebildetes Rührorgan ist jedoch nicht für einen Schleuderdüngerstreuer geeignet, bei dem die Auslauföffnung in der Bodenplatte angeordnet ist. Desweiteren ist bei diesem bekannten Schleuderstreuer von erheblichen Nachteil, daß ein weiteres Rührelement, welches als Schaberelement wirkt, in einem sehr geringen Abstand zu der Bodenplatte angeordnet ist. Hierdurch ist das Anlaufelement sehr groß, weil der Abstand zwischen der Unterseite dieses Rührelementes und der Bodenplatte kleiner als der Korndurchmesser des auszubringenden Materials ist.

Der Erfindung liegt die Aufgabe zugrunde, ein Rührorgan für einen Schleuderdüngerstreuer zu schaffen, welches ein geringes Anlauf- und Antriebsmoment besitzt und gleichzeitig sicherstellt, daß nur eine geringe Restmenge im Vorratsbehälter verbleibt.

Diese Aufgabe wird erfindungsgemäß durch die kennzeichnenden Merkmale des Anspruches 1 gelöst. Infolge dieser Maßnahmen hebt sich das Schaberelement des Rührorgans beim Anlauf des Rührwerkes von der Bodenplatte ab, so daß ein Abstand zwischen der Unterkante des Schaberelementes und der Bodenplatte vorhanden ist, der wesentlich größer als der Korndurchmesser des auszubringenden Materials ist. Das Schaberelement hebt sich an, da es sich gegenüber dem Rührelement nach oben bewegen kann. Wenn der Streuer sich leert bzw. nur noch eine Restmenge im Vorratsbehälter vorhanden ist, bewegt sich das Schaberelement wieder nach unten und fördert das Material bis auf einen kleinen Rest aus den Vorratsbehälter heraus.

Das Schaberelement kann eigenelastisch ausgebildet sein. Es ist jedoch auch möglich, daß das Schaberelement um eine zumindest annähernd parallel zur Bodenplatte verlaufende Schwenkachse schwenkbar am Rührelement befestigt ist.

Eine einfache Anordnung für das Schaberelement läßt sich dadurch erreichen, daß das Rührelement in Vorderansicht gesehen U-förmig, mit den freien Schenkeln nach unten weisend, ausgebildet ist. Somit kann an den freien Enden der nach unten ragenden Schenkel das Schaberelement schwenkbar angeordnet werden.

Vorteilhaft kann sein, wenn das Rührelement exzentrisch an der Antriebswelle befestigt ist. Hierdurch kann erreicht werden, daß das Schaberelement eine nach innen gerichtete Förderwirkung auf das auszubringende Material ausübt. Dieses ist von Vorteil, wenn die Auslauföffnung nur über einen kleinen Querschnitt geöffnet wird. Aufgrund der Ausbringtechnik bei Schleuderdüngerstreuern liegt der Öffnungsbeginn dieser Ausbringöffnung im inneren Bereich der Bodenplatte.

Um eine gute Förderwirkung des Rührelementes von dem äußeren Bereich des unteren Vorratsbehälterbereiches in Richtung der Auslauföffnung zu erreichen, ist vorgesehen, daß zumindest der äußere nach unten weisende Schenkel des Rührelementes derart angestellt ist, daß dessen Förderseite einen größeren Abstand als dessen Rückseite zur Drehachse des Rührorgans bezogen auf die Drehrichtung, aufweist. Hierdurch wird erreicht, daß dieses quasi auf Griff stehende Schenkelelement den Dünger von außen nach innen fördert. Die gleiche Wirkung läßt sich erreichen, wenn ein auf Griff stehendes Förderelement an dem Schaberelement im äußeren Bereich des Schaberelementes angeordnet ist.

Als vorteilhaft hat sich weiterhin herausgestellt, daß das Schaberelement in der Draufsicht gesehen U-förmig ausgebildet ist. Hierbei ist, um zu erreichen, daß nur eine sehr geringe Menge im Vorratsbehälter verbleibt, daß der Schabersteg zumindest teilweise annähernd parallel zur Bodenplatte ausgerichtet ist. Hierdurch hat das Schaberelement das Bestreben, mit seiner gesamten Fläche auf der Bodenplatte aufzuliegen. Die sich im Vorratsbehälter befindliche Restschicht läßt so sich auf Schichthöhe entsprechend der Korngröße oder auf noch geringere Werte verringern.

Desweiteren ist das kürzere, dem längeren Rührelement gegenüber stehende Ende des Rührelementes in Verbindung mit der Verlängerung des Schaberelementes derart ausgelegt, daß die Verlängerung des Schaberelementes über den Steg des Rührelementes hinausragt, über den kleinsten Öffnungsquerschnitt, also den Beginn bei der Freigabe der Auslaßöffnung überstreicht. Hierdurch wird einerseits ein sehr ruhiger und gleichmäßiger Ausfluß des Materials durch die Auslaßöffnung zu der unterhalb der Auslaßöffnung angeordnete Schleuderscheibe erreicht, andererseites werden Verstopfungen der Auslaßöffnung durch evtl. Kluten verhindert, indem diese durch dieses Element zerdrückt werden.

Die Bodenplatte, in welcher die Auslauföffnung angeordnet ist, kann völlig eben, jedoch auch gewölbt ausgebildet sein.

Der Verlauf der Schaberkante des Schaberelementes ist an die Kontur der Bodenplatte angepaßt ausgebildet. Hierdurch wird eine optimale Restentleerung erreicht.

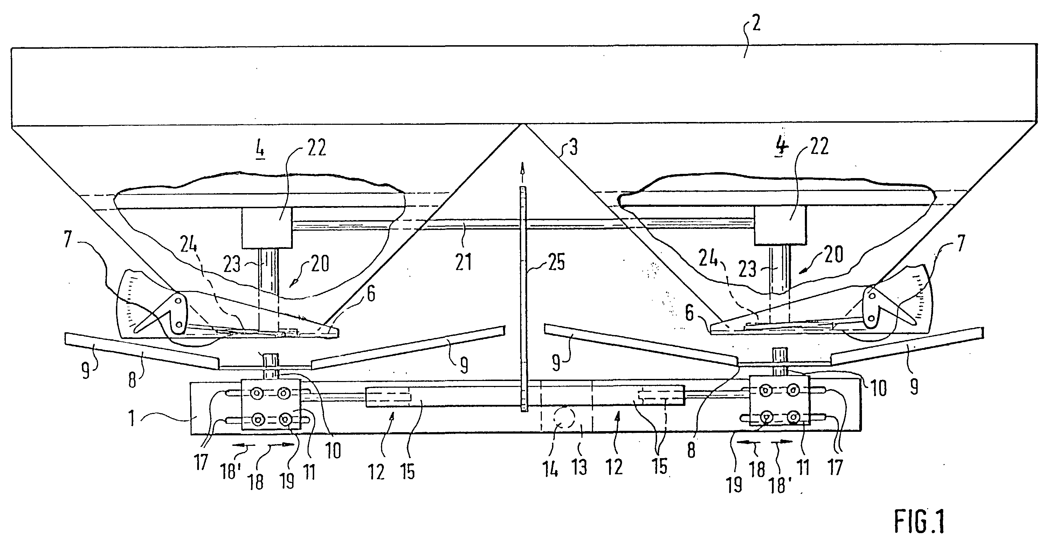

Weitere Einzelheiten der Erfindung sind den übrigen Unteransprüchen, der Beispielsbeschreibung und den Zeichnungen zu entnehmen. Hierbei zeigen
- Fig.1: den Schleuderdüngerstreuer in der Ansicht von hinten in Prinzipdarstellung,
- Fig.2: das Rührorgan in der Ansicht II-II,
- Fig.3: das Rührorgan in der Ansicht III-III,
- Fig.4: das Schaberelement in der Ansicht IV-IV,
- Fig.5: eine weitere Ausbildung des Querschnittes des Schaberelementes,
- Fig.6: eine weitere Ausbildung des Querschnittes des Schaberelementes,
- Fig.7: ein weiteres Rührorgan in der Ansicht entsprechend Fig.2,
- Fig.8: das Rührorgan gemäß Fig.7 in der Ansicht gemäß Fig.3,
- Fig.9: ein weiteres Rührorgan in der Ansicht gemäß Fig.3 und
- Fig.10: ein weiteres Rührorgan in der Ansicht entsprechend Fig.3.

Der Schleuderdüngerstreuer weist den Rahmen 1 und den Vorratsbehälter 2 auf. An dem Rahmen 1 und dem Vorratsbehälter 2 sind in bekannter und daher nicht dargestellter Weise auf der Vorderseite Dreipunktkupplungselemente zum Anbau des Schleuderdüngerstreuers an den Dreipunktkraftheber eines Schleppers angeordnet.

Der Vorratsbehälter 2 ist durch das dachförmige Mittelteil 3 in die beiden Auslauftrichter 4 aufgeteilt. Die Auslauftrichter 4 werden auf ihrer Unterseite durch die eine Auslauföffnung 5 aufweisende Bodenplatte 6 verschlossen. Die Öffnungsweite der Auslauföffnung 5 wird durch den Schieber 7 eingestellt. Der Schieber 7 und die Auslauföffnung 5 bilden die Dosiereinrichtung, unter der jeweils eine rotierend angetriebene Schleuderscheibe 8 mit den Wurfschaufeln 9 angeordnet ist. Die Wurfschaufeln 9 sind in bekannter und nicht näher dargestellter Weise in Winkelebene verschwenkbar auf den Schleuderscheiben 8 in unterschiedlichen Winkelanstellungen einstellbar ausgebildet. Die Schleuderscheiben 8 sind auf den Antriebswellen 10 der Winkelgetriebe 11 leicht lösbar angeordnet, so daß sie in einfacher Weise gegen anders ausgebildete Schleuderscheiben mit Wurfschaufeln für andere Arbeitsbreitenbereiche austauschbar sind. Die Schleuderscheiben 8 werden über die Winkelgetriebe 11 und den Wellenzug 12 von dem Mittelgetriebe 13 angetrieben. Das Mittelgetriebe 13 weist die Eingangswelle 14 auf, welche über eine Gelenkwelle mit der Zapfwelle des den Düngerstreuer tragenden Schleppers verbunden ist.

Die Wellen 15 des Wellenzuges 12 sind teleskopierbar ausgebildet, damit die Getriebe 11 mit den Schleuderscheiben 8 quer zur Fahrtrichtung 16 in unterschiedlichen Positionen zur Dosiereinrichtung 7 einstellbar sind. Hierzu sind in dem Rahmen 1 die Langlöcher 17 angeordnet, so daß die Getriebe 11 mit den Schleuderscheiben 8 in den Pfeilrichtungen 18 und 18' verschiebbar sind. Mittels der Schrauben 19 ist das jeweilige Getriebe 11 in den Langlöchern 17 in unterschiedlichen Positionen am Rahmen 1 zu befestigen. In den Auslauftrichtern 4 und 5 ist jeweils oberhalb der Bodenplatte 6 und der Dosiereinrichtung 7 das langsam bewegbare Rührorgan 20 angeordnet. Zum Antrieb des Rührorgans 20 ist eine quer zur Fahrtrichtung verlaufende Antriebswelle 21 in den Vorratsbehälter 2 hineinragend angeordnet. An den Enden der Antriebswelle 21 ist jeweils ein Winkelgetriebe 22 angordnet. Die aufrecht und nach unten ragenden Wellen 23 der Winkelgetriebe 22 tragen das Rührorgan 24. Die Antriebswelle 21 ist über einen Kettentrieb 25 von der Antriebswelle 15 anzutreiben.

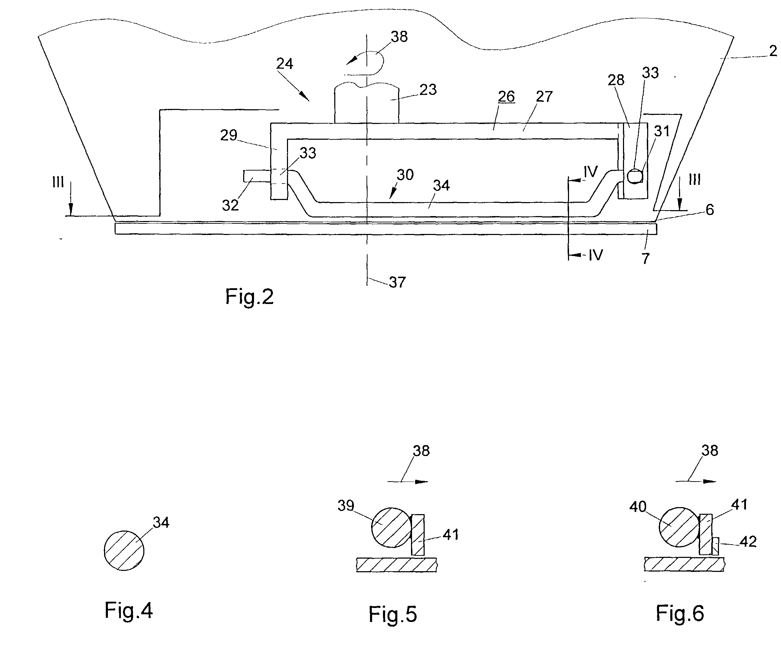

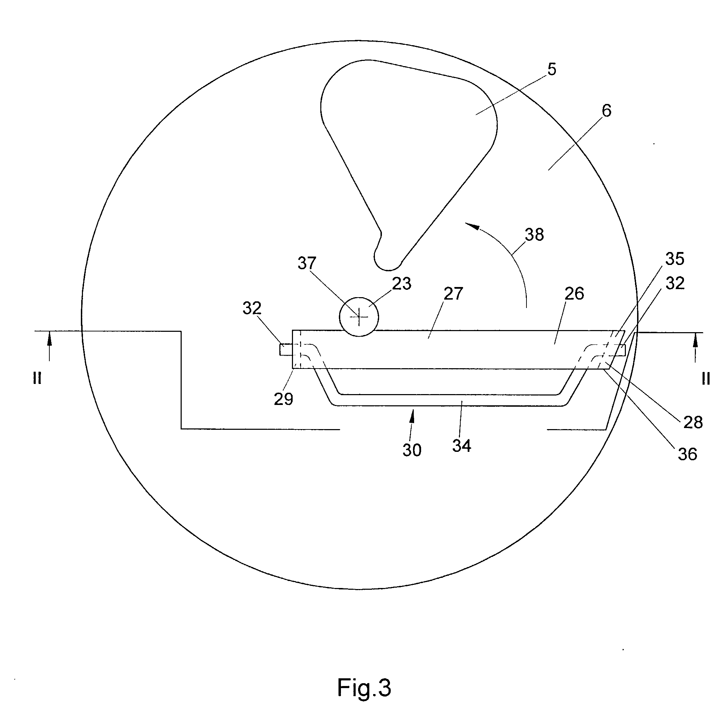

Das Rührorgan 24 weist das U-förmig ausgebildete Rührelement 26 mit den horizontal liegenden Steg 27 und den freien nach unten weisenden Schenkeln 28 und 29 auf. Im Bereich der freien Enden der nach unten ragenden Schenkel 28 und 29 ist das U-förmig ausgebildete Schaberelement 30 mittels der Gelenkzapfen 31 und 32, die durch Bohrungen 33, die in den Schenkeln 28 und 29 angeordnet sind, schwenkbar gelagert ist. Das Schaberelement 30 weist den Schabersteg 34 auf, der zumindest teilweise annähernd parallel zur Bodenplatte 6 ausgerichtet bzw. an die Form der Bodenplatte 6 angepaßt ausgebildet ist. Das Schaberelement 30 weist den runden in Fig.4 dargestellten Querschnitt auf. Der äußere Schenkel 28 des Rührelementes 26 ist derart angestellt, daß dessen Vorderseite 35 einen größeren Abstand als dessen Rückseite 36 zur Drehachse 37 des Rührorgans 24, bezogen auf die Drehrichtung 38, aufweist. Hierdurch ist dieser Schenkel 28 auf Griff eingestellt, so daß er eine nach innen gerichtete Förderwirkung auf das auszubringende Material ausübt und das Material nach innen in Richtung des Öffnungsbeginn der Auslauföffnung 5 zieht. Weiterhin ist der Schabersteg 34 derart ausgebildet, daß er ebenfalls eine nach innen gerichtete Förderwirkung auf das auszubringende Material ausübt. Das Rührelement 26 ist in einem Abstand von zumindest 2cm, vorzugsweise von 3-6cm zur Bodenplatte 6 angeordnet.

Anstelle eines Schaberelementes 30 mit einem eher runden Querschnitt, kann auch ein Schaberelement, mit den Querschnitten 39 oder 40 entsprechend der Fig.5 und 6 vorgesehen sein. Bei diesen Schaberelementen weist der Schabersteg 34, bezogen auf die Drehrichtung 38 gesehen, ein vorderen unteren Bereich 41 auf, der aufrecht verläuft. Zusätzlich ist bei dem Ausführungsbeispiel gemäß Fig.6 auf dem aufrecht verlaufenden Bereich 41 eine Gummi- oder Kunststoffschicht 42 oder Platte angebracht, so daß eine gute Restentleerung möglich ist.

Die Funktionsweise des Rührorgans ist 24 folgende:

Über die Antriebswelle 23 wird das Rührorgan 24 in Pfeilrichtung 38 rotierend angetrieben. Bei dem Anlauf hebt sich das zunächst auf der Bodenplatte 6 aufliegende Schaberelement 30 an und stellt sich auf eine Höhe ein, die etwa auf Höhe der Anlenkung 33 liegt. Wenn der Vorratsbehälter 2 sich entleert und nur noch eine geringte Menge Material im Vorratsbehälter 2 vorhanden ist, sinkt das Schaberelement 30 nach unten und der Schabersteg 34 hat das Bestreben auf der Bodenplatte 6 aufzuliegen. Somit fördert das Schaberelement 30 das auf der Bodenplatte 6 liegende Material durch die geöffnete Auslauföffnung 5 zu der Schleuderscheibe 8, so daß nur noch eine sehr geringe Restmenge im Vorratsbehälter 2 verbleibt.

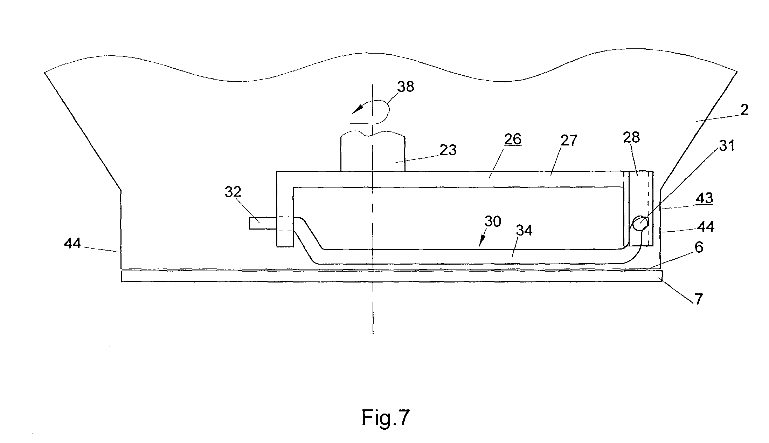

Gemäß dem Ausführungsbeispiel nach Fig.7 weist der untere Bereich 43 des Vorratsbehälters 2 eine topfförmige Gestalt mit etwa aufrecht verlaufenden Wänden 44 auf. Hierbei ist der Durchmesser dieses unteren Bereiches 43 an die äußere Umlaufbahn des Rührorgans 24 angepaßt.

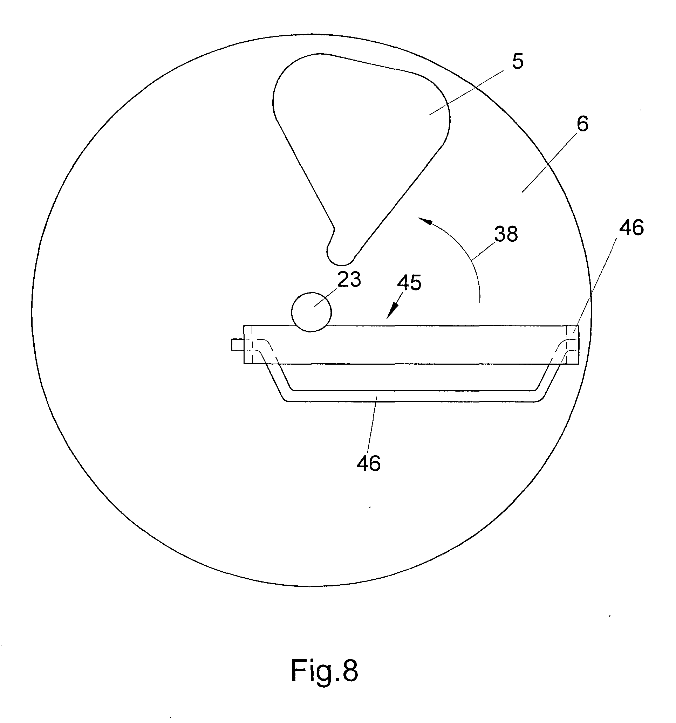

Das Rührorgan 45 gemäß Fig.8 unterscheidet sich von dem Rührorgan 24 der Fig.2 bis 7 dadurch, daß der Schenkel 46 nicht schräg angestellt ist.

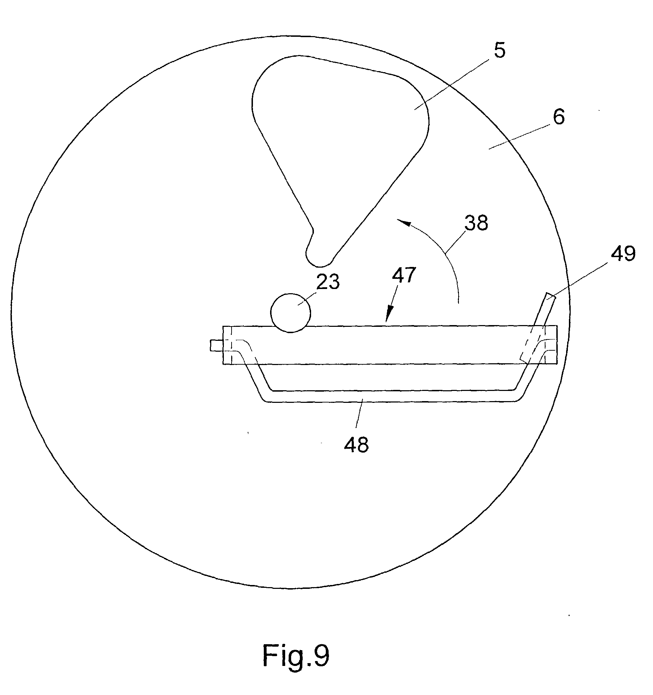

Das Rührorgan 47 gemäß Fig.9 unterscheidet sich von dem Rührorgan 24 der Fig.2 bis 8 dadurch, daß an dem Schaberelement 48 ein auf Griff stehendes Förderelement 49 angeordnet ist, welches entsprechend des Schenkels 28 des Rührelementes 24 gemäß Fig.2 das Material aus dem äußeren Bereich nach innen fördert.

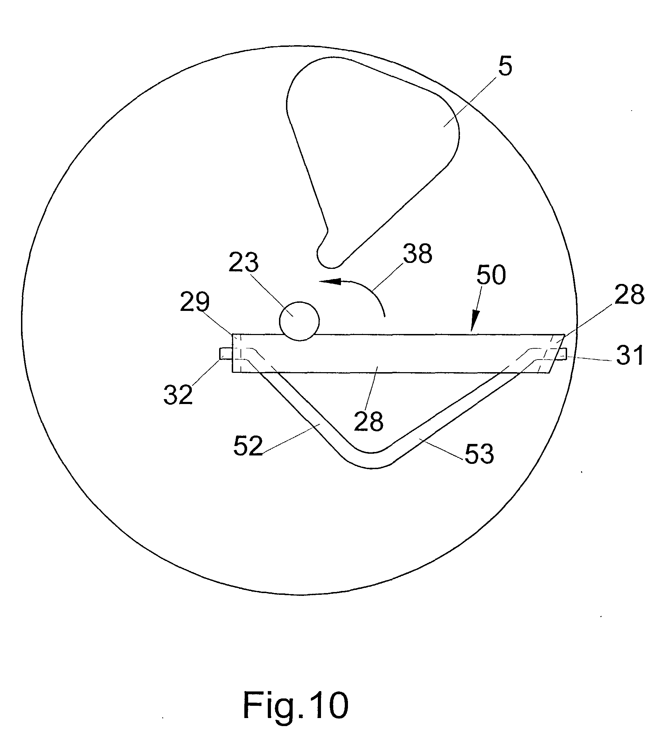

Das Rührorgan 50 gemäß Fig.10 unterscheidet sich von dem Rührorgan 24 gemäß der Fig.2 und 3 dadurch, daß das Schaberelement 51 aus zwei in einem stumpfen Winkel zueinander liegenden Stegen 52 und 53 besteht, die wiederum mit Gelenkzapfen 31 und 32 an den aufrechtverlaufenden Schenkel 28 und 29 des Rührelementes 26 schwenkbar befestigt sind.

## Patentansprüche

1. Schleuderstreuer, insbesondere für Düngemittel, mit einem Vorratsbehälter, der in seinem unteren Bereich zumindest eine in einer Bodenplatte sich befindliche einstellbare Auslauföffnung sowie zumindest ein rotierend angetriebenes Rührorgan aufweist, wobei das Rührorgan ein an der Antriebswelle befestigtes und zumindest annähernd parallel zu der Bodenplatte ausgerichtetes Rührelement aufweist, welches in einem Abstand zur Bodenplatte angeordnet ist und zumindest an seinem äußeren Ende ein nach unten ragendes Ansatzelement aufweist, **dadurch gekennzeichnet, daß** an dem Rührelement (26) ein in Drehrichtung des Rührorgans (24) gesehen schleppend zu dem Rührorgan (24) angeordnetes Schaberelement (30, 46, 48, 52, 53) angebracht ist, daß das Schaberelement (30, 46 ,48, 52 ,53) zumindest teilweise gegenüber dem Rührelement (26) auf- und abbewegbar ausgebildet ist.

2. Schleuderstreuer nach Anspruch 1, **dadurch gekennzeichnet, daß** das Schaberelement eigenelastisch ausgebildet ist.

3. Schleuderstreuer nach Anspruch 1, **dadurch gekennzeichnet, daß** das Schaberelement (30, 46, 48, 52, 53) um eine zumindest annähernd parallel zur Bodenplatte (6) verlaufende Schwenkachse schwenkbar am Rührelement (26) befestigt ist.

4. Schleuderstreuer nach Anspruch 1, **dadurch gekennzeichnet, daß** das Rührelement (26, 45, 47, 50) in Vorderansicht gesehen U-förmig, mit den freien Schenkeln (28, 29) nach unten weisend, ausgebildet ist.

5. Schleuderstreuer nach einem oder mehreren der vorstehenden Ansprüche, **dadurch gekennzeichnet, daß** an den freien Enden der nach unten ragenden Schenkel (28, 29) das Schaberelement (30, 46, 48, 52, 53) schwenkbar angeordnet ist.

6. Schleuderstreuer nach einem oder mehreren der vorstehenden Ansprüche, **dadurch gekennzeichnet, daß** das Rührelement (26) exzentrisch an der Antriebswelle (23) befestigt ist.

7. Schleuderstreuer nach einem oder mehreren der vorstehenden Ansprüche, **dadurch gekennzeichnet, daß** zumindest der äußere nach unten weisende Schenkel (28) des Rührelementes derart angestellt ist, daß dessen Vorderseite (35) einen größeren Abstand als dessen Rückseite (36) zur Drehachse (37) des Rührorgans (23), bezogen auf die Drehrichtung, aufweist.

8. Schleuderstreuer nach einem oder mehreren der vorstehenden Ansprüche, **dadurch gekennzeichnet, daß** an dem radial von der Drehachse (37) am entferntesten liegenden Bereich des Schaberelementes (48) ein "auf Griff" stehendes Förderelement (49) angeordnet ist.

9. Schleuderstreuer nach einem oder mehreren der vorstehenden Ansprüche, **dadurch gekennzeichnet, daß** das Schaberelement (30, 46, 48) in der Draufsicht gesehen U-förmig ausgebildet ist.

10. Schleuderstreuer nach einem oder mehreren der vorstehenden Ansprüche, **dadurch gekennzeichnet, daß** das Schaberelement zwei in einem stumpfen Winkel zueinander angeordnete Stege (52, 53) aufweist.

11. Schleuderstreuer nach einem oder mehreren der vorstehenden Ansprüche, **dadurch gekennzeichnet, daß** der Schabersteg (34, 46, 48, 52, 53) zumindest teilweise zumindest annähernd parallel zur Bodenplatte (6) ausgerichtet ist.

12. Schleuderstreuer nach einem oder mehreren der vorstehenden Ansprüche, **dadurch gekennzeichnet, daß** zumindest der radial am weitesten außen liegende Bereich des Schaberstege (34, 46, 48, 53) derart angeordnet ist, daß eine nach innen gerichtete Förderwirkung auf das auszubringende Material ausgeübt wird.

13. Schleuderstreuer nach einem oder mehreren der vorstehenden Ansprüche, **dadurch gekennzeichnet, daß** das Rührelement (26) einen Abstand von zumindest 2cm, vorzugsweise 3 bis 6cm zur Bodenplatte (6) aufweist.

14. Schleuderstreuer nach einem oder mehreren der vorstehenden Ansprüche, **dadurch gekennzeichnet, daß** der in Drehrichtung (38) gesehen vordere, untere Bereich (41) des Schabersteges aufrecht verläuft.

15. Schleuderstreuer nach Anspruch 14, **dadurch gekennzeichnet, daß** auf dem aufrecht verlaufenden Bereich (41) eine Gummi- oder Kunststoffschicht (42) oderplatte angeordnet ist.

## Claims

1. Centrifugal broadcaster, more especially for fertiliser, including a hopper which has, in its lower region, at least one adjustable outlet aperture situated in a base plate, as well as at least one rotatingly driven agitator, the agitator having an agitating member which is mounted on the drive shaft and is orientated at least approximately parallel to the base plate, said agitating member being disposed at a spacing from the base plate and having a downwardly protruding extension member at least at its outer end, **characterised in that** a scraping member (30, 46, 48, 52, 53), which is disposed in a trailing-like manner relative to the agitator (24) when viewed with respect to the direction of rotation of the agitator (24), is attached to the agitating member (26), and **in that** the scraping member (30, 46, 48, 52, 53) is at least partially displaceable upwardly and downwardly relative to the agitating member (26).

2. Centrifugal broadcaster according to claim 1, **characterised in that** the scraping member is inherently resilient.

3. Centrifugal broadcaster according to claim 1, **characterised in that** the scraping member (30, 46, 48, 52, 53) is mounted on the agitating member (26) so as to be pivotable about a pivotal axis extending at least approximately parallel to the base plate (6).

4. Centrifugal broadcaster according to claim 1, **characterised in that** the agitating member (26, 45, 47, 50) has a U-shaped configuration when viewed from the front, with the free portions (28, 29) extending downwardly,

5. Centrifugal broadcaster according to one or more of the preceding claims, **characterised in that** the scraping member (30, 46, 48, 52, 53) is pivotably disposed at the free ends of the downwardly protruding portions (28, 29).

6. Centrifugal broadcaster according to one or more of the preceding claims, **characterised in that** the agitating member (26) is eccentrically mounted on the drive shaft (23).

7. Centrifugal broadcaster according to one or more of the preceding claims, **characterised in that** at least the outer, downwardly extending portion (28) of the agitating member is orientated in such a manner that the front side (35) thereof has a greater spacing from the rotary axis (37) of the agitator (23) than the rear side (36) thereof, with respect to the direction of rotation.

8. Centrifugal broadcaster according to one or more of the preceding claims, **characterised in that** a conveyor (49), which is "on standby", is disposed in the region of the scraping member (48) situated the furthest away from the rotary axis (37) radially.

9. Centrifugal broadcaster according to one or more of the preceding claims, **characterised in that** the scraping member (30, 46, 48) has a U-shaped configuration when viewed from above.

10. Centrifugal broadcaster according to one of more of the preceding claims, **characterised in that** the scraping member has two webs (52, 53), which are disposed at an obtuse angle relative to each other.

11. Centrifugal broadcaster according to one or more of the preceding claims, **characterised in that** the scraping web (34, 46, 48, 52, 53), at least partially, is aligned at least approximately parallel to the base plate (6).

12. Centrifugal broadcaster according to one or more of the preceding claims, **characterised in that** at least the radially outermost region of the scraping web (34, 46, 48, 53) is disposed in such a manner that an inwardly orientated conveying action is exerted upon the material to be distributed.

13. Centrifugal broadcaster according to one or more of the preceding claims, **characterised in that** the agitating member (26) has a spacing of at least 2 cm, preferably between 3 and 6 cm, from the base plate (6).

14. Centrifugal broadcaster according to one or more of the preceding claims, **characterised in that** the front, lower region (41) of the scraping web, when viewed with respect to the direction of rotation (38), extends upwardly,

15. Centrifugal broadcaster according to claim 14, **characterised in that** a rubber or plastics material layer (42) or rubber or plastics material plate is disposed on the upwardly extending region (41).

## Revendications

1. Epandeur centrifuge notamment pour de l'engrais, comprenant un réservoir d'alimentation dont la zone inférieure comporte un orifice de sortie réglable prévu dans une plaque de fond ainsi qu'au moins un organe agitateur entraîné en rotation, cet organe agitateur étant muni d'un élément agitateur fixé à l'arbre d'entraînement au moins sensiblement parallèlement à la plaque de fond, à une certaine distance de la plaque de fond et au moins à son extrémité extérieure il comporte un élément rapporté, en saillie vers le bas,
**caractérisé en ce que**
l'élément agitateur (26) comporte de manière tirée dans le sens de rotation de l'organe agitateur (24), par rapport à celui-ci, un élément racleur (30, 46, 48, 52, 53) qui peut au moins en partie se soulever et s'abaisser par rapport à l'élément agitateur (26).

2. Epandeur centrifuge selon la revendication 1,
**caractérisé en ce que**
l'élément racleur a l'élasticité du caoutchouc.

3. Epandeur centrifuge selon la revendication 1,
**caractérisé en ce que**
l'élément racleur (30, 46, 52, 53) est fixé autour d'un axe de pivotement au moins sensiblement parallèle à la plaque de fond (6), de manière à pouvoir pivoter par rapport à l'élément agitateur (26).

4. Epandcur centrifuge selon la revendication 1,
**caractérisé en ce que**
l'élément agitateur (26, 45, 47, 50) présente en vue de face une forme de U avec une branche libre (28, 29) tournée chaque fois vers le bas.

5. Epandeur centrifuge selon l'une quelconque des revendications précédentes,
**caractérisé en ce que**
les extrémités libres des branches (28, 29) tournées vers le bas de l'élément racleur (30, 46, 48, 52, 53) sont pivotantes.

6. Epandeur centrifuge selon l'une quelconque des revendications précédentes,
**caractérisé en ce que**
l'élément agitateur (26) est fixé de manière excentrée sur l'arbre d'entraînement (23).

7. Epandeur centrifuge selon l'une quelconque des revendications précédentes,
**caractérisé en ce qu'**
au moins la branche extérieure (28) tournée vers le bas de l'élément agitateur est disposée pour que sa face avant (35) possède une plus grande distance que sa face arrière (36) par rapport à l'axe de rotation (37) de l'organe agitateur (23) lorsqu'on se réfère au sens de rotation.

8. Epandeur centrifuge selon l'une quelconque des revendications précédentes,
**caractérisé en ce que**
la zone radialement la plus éloignée de l'axe de rotation (37) au niveau de l'élément racleur (48) est un élément de transfert (49) disposé de façon à être en prise.

9. Epandeur centrifuge selon l'une quelconque des revendications précédentes.
**caractérisé en ce que**
l'élément racleur (30, 46, 48) présente une forme de U lorsqu'on le regarde en vue de dessus.

10. Epandeur centrifuge selon l'une quelconque des revendications précédentes,
**caractérisé en ce que**
l'élément racleur comporte deux branches (52, 53) faisant entre elles un angle obtus.

11. Epandeur centrifuge selon l'une quelconque des revendications précédentes,
**caractérisé en ce que**
l'élément racleur (34, 46, 48, 52, 53) est aligné au moins en partie parallèlement à la plaque de fond (6).

12. Epandeur centrifuge selon l'une quelconque des revendications précédentes,
**caractérisé en ce qu'**
au moins la zone radialement la plus à l'extérieur des branches de raclage (34, 46, 48, 53) sont disposées pour exercer un effet de transfert dirigé vcrs l'intérleur sur la matière à distribuer.

13. Epandeur centrifuge selon l'une quelconque des revendications précédentes,
**caractérisé en ce que**
l'élément agitateur (26) est à une distance d'au moins 2 cm, de préférence entre 3 et 6 cm par rapport à la plaque de fond (6).

14. Epandeur centrifuge selon l'une quelconque des revendications précédentes.
**caractérisé en ce que**
la zone inférieure (41) avant vue dans le sens de rotation (38) de l'élément racleur est relevée.

15. Epandeur centrifuge selon la revendication 14,
**caractérisé en ce que**
la zone (41) relevée, comporte une couche ou plaque de caoutchouc ou, de matière synthétique (42).
